# EUROPEAN PATENT APPLICATION

(11) **EP 1 726 607 A2**
(43) Date of publication of application: **29.11.2006**
(21) Application number: 06114545.4
(22) Date of filing: 24.05.2006
(51) Int. Cl.: C08G 73/06, C08G 83/00

(54) **Triazine containing polymers**

(30) Priority: 25.05.2005 EP 05011378
(71) Applicant: Fraunhofer-Gesellschaft zur Förderung der angewandten Forschung e.V., 80686 München (DE)
(72) Inventor: Dreyer, Christian, 55758, Niederwörresbach (DE); Bauer, Monika, 15754, Senzig (DE); Schneider, Jürgen, 14513, Teltow (DE); Bauer, Jörg, 13156, Berlin (DE)
(74) Representative: Olgemöller, Luitgard Maria

(57) **Abstract**

The present invention is directed to hyperbranchend compounds, comprising triazine rings and containing free OH groups in the outer sphere, obtainable by copolymerization of (1) at least one di- or higher functional cyanate compound, and (2) at least one compound, selected from mono-, di- and polyvalent aromatic alcohols and mono-, di- and polyfunctional, partly or fully fluorinated alcohols. With one or more (activated) organic acids having formula Q-C(O)Y, wherein Q is an organic residue X comprising at least one unit which can serve as a crosslinking unit or an organic residue P which cannot undergo a crosslinking reaction, and wherein C(O)Y is either a carboxylic group or is an activated carboxylic residue, derivatives may be obtained which can be crosslinked into polymers, via the said X residues, and/or which may have specifically tailored properties, via the said P residues, and/or by using less than the required amount of acid in order to maintain part of the free hydroxy residues.

## Description

### FIELD OF THE INVENTION

The present invention relates in general to new triazine containing polymers. This new class of polymeric materials contains triazine-rings as seen below as a branching unit.

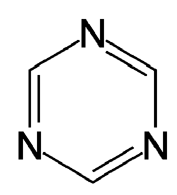

### BACKGROUND OF THE INVENTION

Today there is a big demand for new High-Performance Polymers for different kind of applications. Especially reactive resins are needed in high-technology. Some examples for their fields of application are: Microelectronics, automotive, aeronautic, outer space applications, optics, integrated optics, coatings, photoresists, adhesives, dyes or resins in combination with dyes, materials with low flammability, in the medical field, for light weight construction, as composite materials and others.

Reactive resins are used in the field of microelectronics, e.g. as encapsulants, coatings, underfillers, materials with low dielectric constant, materials with high dielectric constant and the like. In the automotive field reactive resins are used as adhesives, as matrix-materials for abrasives (e.g. brakes, clutch linings), as body fillers, coatings, as matrix material for diamond cutting saw and related fields. In aeronautics reactive resins are used as base materials for composites (light-weight construction, materials with low flammability), as adhesives, coatings, sealants and the like. In the field for outer space applications, reactive resins are used for example as adhesives, sealants, coatings, x-ray stable coatings, matrix-materials for light-weight applications, composites, protective coatings. In the optics, reactive resins are used for coatings, protective coatings (against irradiation, UV, X-Ray), as lenses, as fibres, light guiding equipment and the like. In integrated optics, reactive resins find use as waveguide materials, photoresists, substrates, (protective) coatings, adhesives, underfillers, encapsulants. Medical applications might be materials for artificial teeth, artificial bones, matrix materials for cell cultures, for different analytical applications, tubing (e.g. for infusions) and several other biocompatible fields.

It is a problem of the present invention to provide a new material class which can easily be converted into a multiplicity of different products, the products being variable in a broad range and can therefore advantageously be used as specifically tailored applications.

### Summary of the Invention

This invention focuses on a new material class of triazine containing polymers, their synthesis and applications.

In a first aspect of the invention, new hyperbranched triazine-containing compounds are provided which carry free hydroxy groups in their outer sphere and which are soluble in solvents commonly used for esterification.

In a second aspect of the invention, a method is provided by which the said triazine-containing molecules can be converted in a broad variety of products having specifically tailored properties.

In a third aspect of the invention, resin-like products are provided which are obtained by esterification of the above mentioned hyperbranched triazine-containing compounds. The said products may carry residues which may serve as crosslinking units or, may be further substituted. Alternatively, the said residues are chemically in general inactive. By appropriately using different esterification compounds, a product may be obtained wherein a desired amount of hydroxy groups is converted into residues having a crosslinking unit, which allows e.g. to provide a resin which can be cured by crosslinking or otherwise be further reacted to an adjusted amount.

Finally, the present invention provides cured polymers, prepared from the resin-like products of the esterification as mentioned above.

It should be noted that cyanate compounds undergo cyclotrimerization, resulting in polymeric structures containing triazine rings (formed by 3 cyanato groups each). This cyclotrimerization occurs at moderate increased temperatures and can, if desired, be catalyzed, e.g. by the aid of metal salts (e.g. Zinc chloride), metal acetylacetonate complexes or phenols.

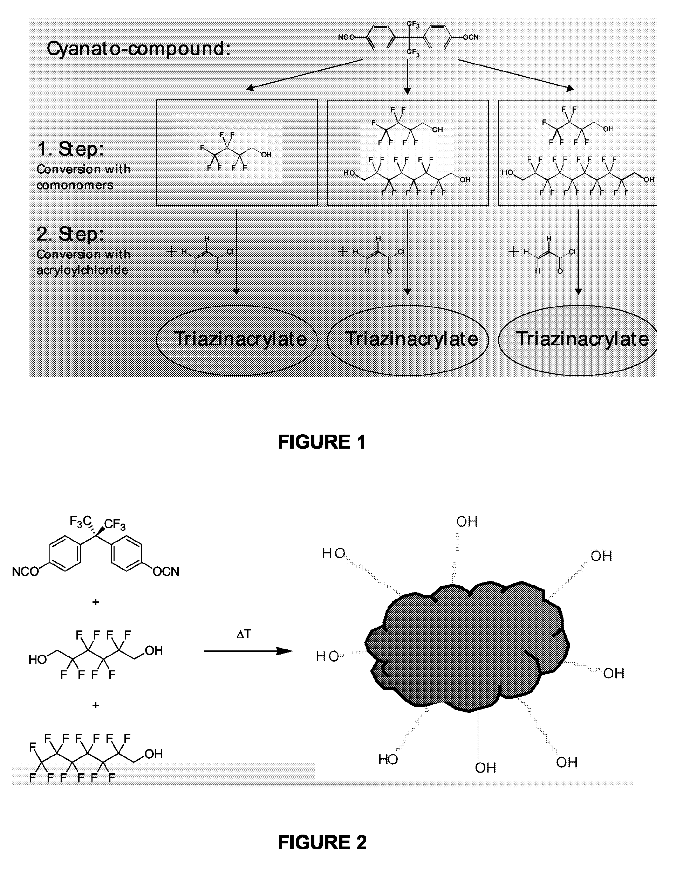

The new triazine containing polymers can be obtained by a synthesis route with at least two-steps. In the first step, cyanate esters (at least two cyanate residues containing molecules) or cyanate ester resins (i.e. dimers, oligomers and/or higher prepolymers derived from said molecules), respectively, are converted into OH- containing (pre-)polymers by copolymerization with mono and/or di- and/or higher-functional phenols or partly fluorinated alcohols. Examples for the synthesis of said new triazine containing polymers are shown in Figure 1.

The OH-groups of the resulting (pre-)polymers can then be reacted with other reactive compounds. In Figure 1, the conversion of the OH-groups into triazine acrylates is shown exemplary. The contents or the ratio, respectively, of the particular compounds are/is appropriately chosen so that the resulting (pre)polymer after step 2 is soluble in common organic solvents and can be applied e.g. as a coating or onto glass-fabrics and cured thermally or via UV-irradiation or via E-beam afterwards.

The resulting polymers (after step 2) can also be cured in bulk thermally or via UV-irradiation or via E-beam.

Depending on the particular composition, the (fully) cured polymers show low optical losses, especially in the IR-region around 1550 nm and 1300 nm and further a high thermostability.

### Detailed description of the invention

The new class of polymeric materials containing triazine-rings as branching units can be obtained by different ways, described as follows:

### (i) OH-containing ("hyperbranched") macromolecules

At least one di- or more- functional cyanate (1a) is copolymerized with at least one compound, selected from mono, di-, or polyfunctional phenols (2a), and/or from monofunctional partly or fully fluorinated alcohols (2b). Instead, or in addition, other chemical compounds containing one or more OH-groups could be used.

Monofunctional alcohols and/or monophenols are preferred which conveniently may be partly or fully fluorinated.

Monofunctional cyanates having formula (1b) below can be used as comonomers.

The di- or more-functional cyanates may conveniently or preferably be selected from the following compounds (1a): 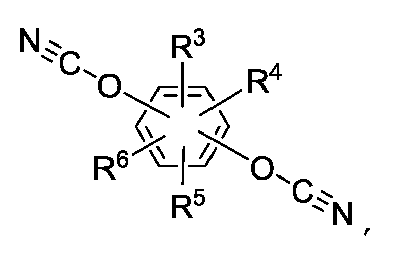 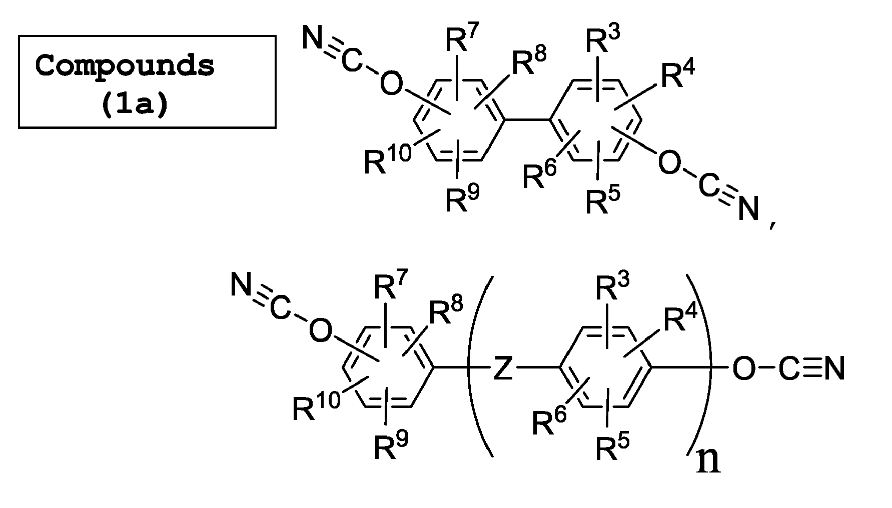 wherein
R³, R⁴, R⁵, R⁶, R⁷, R⁸, R⁹, R¹⁰ are radicals which are preferably independently selected under -H, -F, -Cl, -Br, -I, straigth, branched or cyclic alkyl, partly fluorinated straight, branched or cyclic alkyl, fully fluorinated straight or branched or cyclic alkyl (the alkyl optionally being further substituted), more preferably -CH₃, -CF₃, -(CH₂)_{n*}-CH₃, -(CF₂)_{n*}-CF₃ (with n* from 1 to 18, even more preferably from 1 to 8), wherein part of F may be replaced by H, -CH(CF₃)₂, -C(CH₃)₃, -Ph, condensed aromates (e.g. naphthalene, anthracene, phenanthrene), -NO₂, -OCH₃, -O-C=O-R¹⁷, where R¹⁷ is freely selectable and preferably is an optionally substituted alkyl group or aryl group, and under epoxy groups, and wherein
n is an integer of preferably from 1 to 12, and wherein
Z is for example selected from a chemical bond, SO₂, CF₂, CH₂, CHF, CH(CH₃)₂, isopropylene, hexafluoroisopropylene, n-or iso-C₁₋C₁₈ alkylene which may be partly or fully fluorinated, O, NR¹⁹,
N=N, CH=CH, -(C=O)-O-, CH=N, -C≡C-, CHN-N=CH, alkyloxyalkylene having 1 to 18 carbon atoms which is optionally partly or fully fluorinated, S, Si(CH₃)₂, Si(CH₃)₂-[O-SiCH₃]ₚ wherein p is an integer between 1 and 12, or 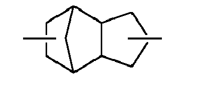 wherein R¹⁹ is hydrogen or C₁-C₁₈ alkyl.

Alternatively, one or more of R³, R⁴, R⁵, R⁶, R⁷, R⁸, R⁹, R¹⁰ can instead be -OCN or a residue carrying an -OCN substituent.

Another group of compounds (1a) may be represented by the following formula (1a*) : 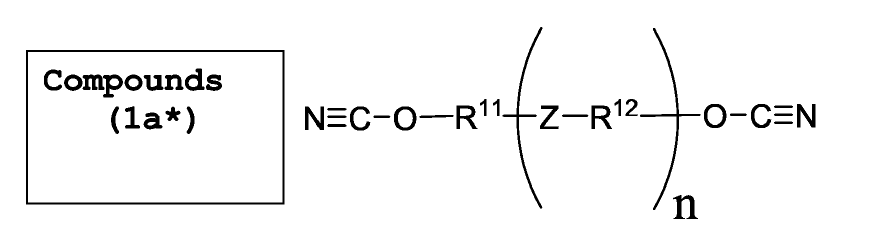 wherein R¹¹ and R¹² are alkylene (sometimes instead: alkenylene) groups having 1, 2 or more carbon atoms which can, but must not necessarily, be partly or fully fluorinated. Examples are CH₂, CH₂-CH₂ CH=CH, CHF-CHF or C(R')₂₋R"-C(R')₂, wherein each R' is, independently from the other, hydrogen or fluorine or an optionally substituted, preferably fluorinated alkyl or alkenyl group having preferably 1 to 6, more preferably 2 to 4 carbon atoms. R' is more preferred hydrogen. R" is a non aromatic, twice binding hydrocarbon group, preferably an alkylene of 2 to 12 carbon atoms. More preferably, R¹¹, R¹² are straight, branched, or cyclic non-aromatic hydrocarbon radicals or may comprise a cyclic structure. Preferably, the nonaromatic hydrocarbon radical has 1 to 15, more preferably 3 to 12 carbon atoms. It is to note that each of the carbon atoms of R¹¹, R¹² may carry 1,2 or, if it is a terminal carbon atom, 3 fluorine atoms. Fully fluorinated carbon atoms (-CF₃, -CF₂-) are preferred.
n and Z in formula (1a*) can be defined as above for the other compounds of formula (1a). Instead, n may also be 0.

In a specific embodiment, R¹¹ and/or R¹² may carry one or more further substituents, preferably one or more -OCN groups.

The monofunctional cyanates having formula (1b) can be chosen from the following compounds: 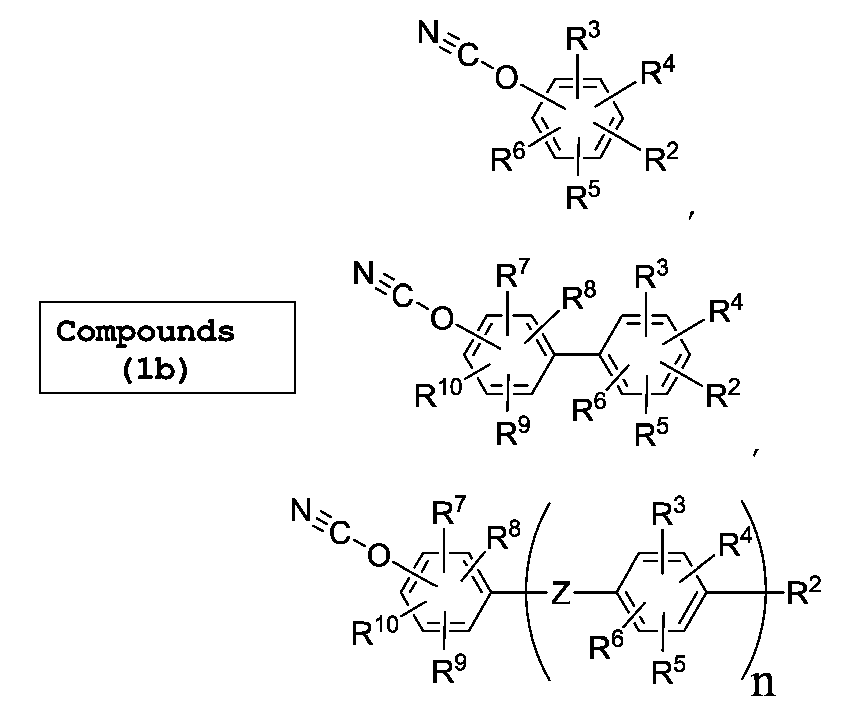 wherein R³, R⁴, R⁵, R⁶, R⁷, R⁸, R⁹, R¹⁰, n, and Z are as defined above for compounds having formulae (1a) above, and R² has the same meaning as any of R³ to R¹⁰ and can be selected independently from the meaning of any of R³ to R¹⁰.

Alternatively, compounds (1b) may be seleced under compounds having the following formula (1b*): 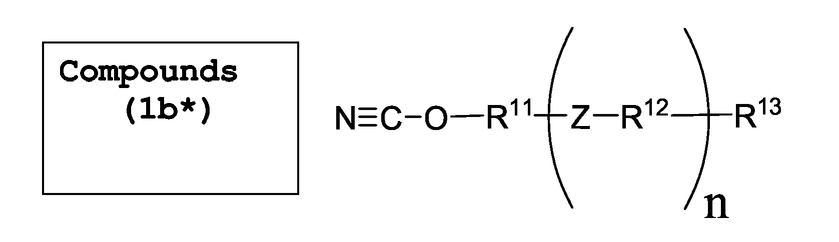 Wherein R¹¹, R¹², Z and n are defined as above for compounds having formula (1a*), and R¹³ is an alkyl group having 1, 2 or more carbon atoms which can, but must not necessarily, be partly or fully fluorinated. Examples are CH₃, CH₂-CH₃ CH=CH₂, CF₂-CF₃ or C(R')₂-R"-C(R')₃, wherein each R' is, independently from the other, hydrogen or fluorine or an optionally substituted, preferably fluorinated alkyl or alkenyl group having preferably 1 to 6, more preferably 2 to 4 carbon atoms. R' is more preferred hydrogen. R" is a non aromatic, twice binding hydrocarbon group, preferably an alkylene of 2 to 12 carbon atoms. More preferably, R¹³ is a straight, branched, or cyclic non-aromatic hydrocarbon radical or may comprise a cyclic structure. Preferably, the nonaromatic hydrocarbon radical has 1 to 15, more preferably 3 to 12 carbon atoms. It is to note that each of the carbon atoms of R¹³ may carry 1,2 or, if it is a terminal carbon atom, 3 fluorine atoms. Fully fluorinated carbon atoms (-CF₃, -CF₂-) are preferred.

The phenols can be chosen from the following compounds (2a): 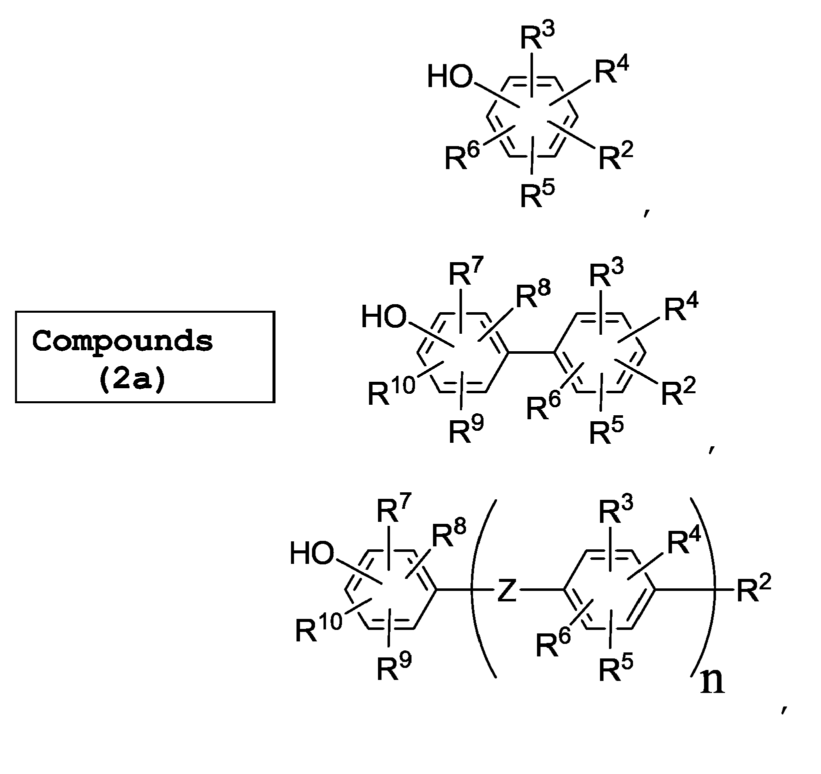 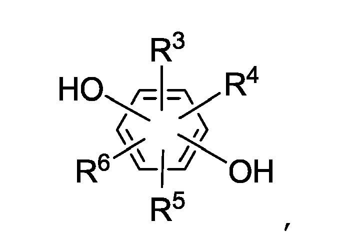 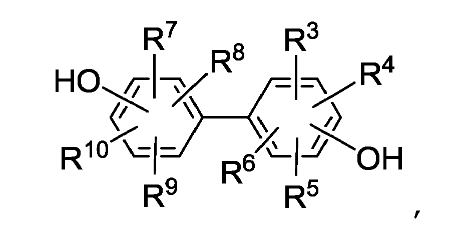 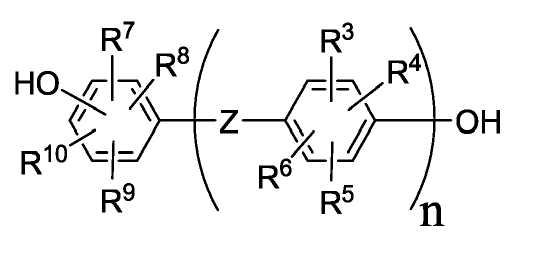 wherein R³, R⁴, R⁵, R⁶, R⁷, R⁸, R⁹, R¹⁰ , Z and n are as defined for compounds having formula (1a), except that usually none of R³, R⁴, R⁵, R⁶, R⁷, R⁸, R⁹, R¹⁰ will be -OCN or a residue carrying an -OCN substituent.

Alternatively, in compounds having formula (2a), one or more of R³, R⁴, R⁵, R⁶, R⁷, R⁸, R⁹, R¹⁰ can also be -OH or may carry OH as a substituent.

The mono-, di- or polyfunctional partly or fully fluorinated alcohols can be chosen from the following compounds (2b):

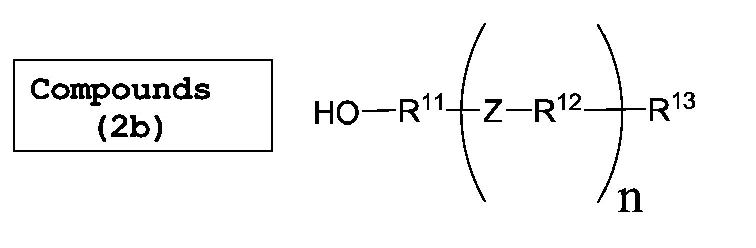

Alternatively, they may be selected from compounds (2b) depicted below: 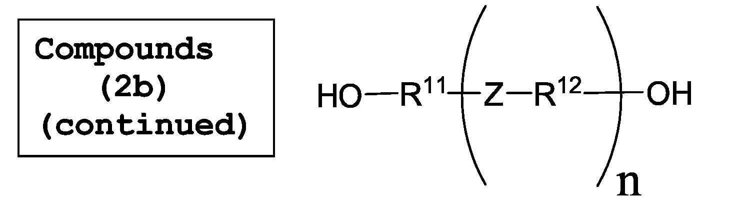 wherein, in the compounds (2b), R¹¹, R¹² and R¹³, Z and n are defined as for compounds having formula (1b*), except that usually none of R¹¹, R¹² and R¹³ will be a residue carrying an -OCN substituent.

Instead, one or more of R', R" can also be OH.

To obtain the OH-containing polymeric compounds, the above mentioned cyanates can also (or instead) be reacted with epoxyde-containing (glycidyl-ether-containing) compounds. Such compounds ma be of formulae 2a, 2b above, except that the hydroxy groups therof are preplace by glycidyl residues (-O-[COC]). The reaction of cyanates with epoxides is described in I. Hamerton, Chemistry and Technology of Cyanate Ester resins, Page 130, 1994.

Cyanates can be copolymerized with the above mentioned OH-containing compounds (2a, 2b,) and possibly with additional components, e.g. monofunctional cyanate compounds or glycidylether compounds as mentioned above, via polymerization in bulk or in solution, possibly under heating ("thermal polymerization"). The mechanism is shown in Figure 2.

Depending on the number of cyanato-groups and on the reactivity of the cyanates and also of the reactivity of the used OH-containing compound(s) (phenols or fluoroalcohols, respectively), the resulting polymer could form a highly dense network, as far as all the cyanato-groups would be converted. This can be the case if smaller amounts of the OH-containing compounds (2a, 2b, 2c) (e.g. less than a stoichometric amount in some cases) is used. This is, however, not desired since said hyperbranched compound, carrying a number of OH groups, shall be able to undergo an esterification reaction. However, it has been found that at a certain content (i.e. above a lower limit) of OH-containing compounds, the so called gelation does not take place. In such cases, the resulting polymer will consist out of a distribution of (smaller) macromolecules, which can be dissolved in appropriate solvents. Increasing the OH-content will further result in lower molecular weights of the resulting macromolecules. It has been proven that the said lower limit is around 0.5 mol OH groups per mol OCN group, if monophenols or monofunctional (fluorinated) aliphatic alcohols are used. In case di- or higher functional phenols or aliphatic alcohols are used, the ratio is substantially different: The effect will only be obtained if at least 1 mole, preferably at least 1,5 moles and most preferably 2 moles of OH groups are present per mole OCN group. If mixtures of monovalent and divalent alcohols or phenols are used, the ratio of OH groups can be found by combining the above rules in a mathematically correct way.

The OH containing macromolecules of the present invention are preferably soluble in common organic solvents, more preferably in solvents which are useful for esterification reactions and most preferably in at least one of the group consisting of MEK (methyl ethyl ketone), THF (tetrahydrofurane), CHCl₃, CH₂Cl₂ and acetone, and can therefore be used in different applications. The viscosity of the solutions can be adjusted by using different concentrations.

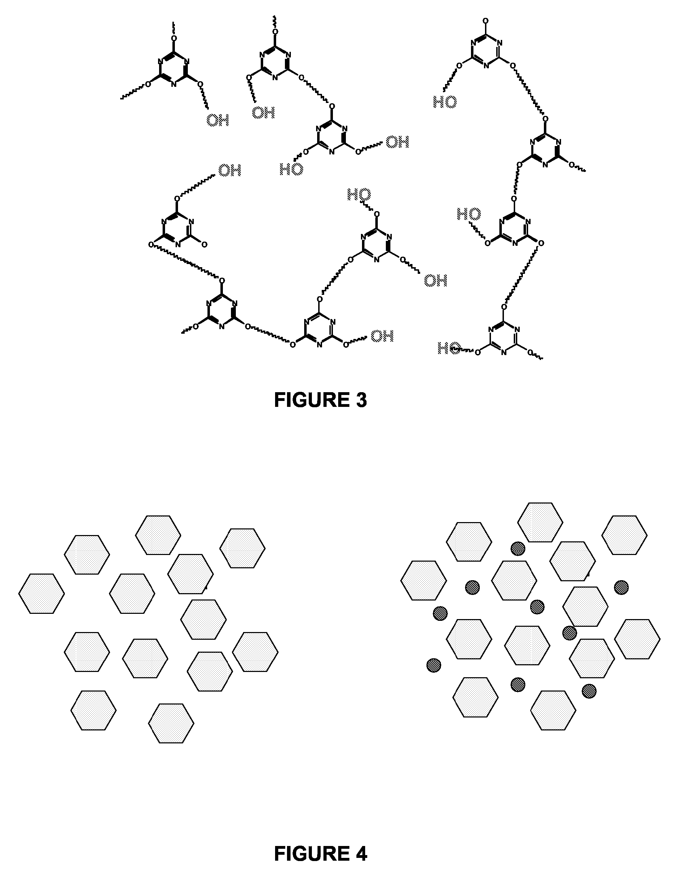

Due to their solubility, the OH containing macromolecules of the present invention can be regarded as hyperbranched compounds. They have a huge number of functional groups (primarily in the outer sphere). In the case of this invention, said functional groups (i.e. those used for further reactions) are part or all of the OH-groups. Figure 3 shows the structure of these macromolecules, i.e. OH-terminated triazine-macromolecules. The undulated lines stand for the different possible components (corresponding to the different phenols, alcohols and/or cyanates).

It is possible to obtain these triazine containing macromolecules by converting all of the cyanato-groups into triazine-rings via cyclotrimerization. The resulting OH-group containing macromolecules can be converted to further useful compounds, described under (ii).

For special applications it might be necessary to convert only a part of the cyanato-groups. This can be achieved by reducing the temperature, before the cyclotrimerization has been completed, and by maintaining the product at rather low temperatures, preferably by quenching the reaction for example using liquid nitrogen. This invention therefore also covers OH-containing triazine-containing macromolecules containing residual cyanato-groups.

In a preferred embodiment of the invention, these macromolecules (hyperbranched compounds) containing residual cyanate groups can be used as or in coatings, paintings, functional films, as resins for prepregs, laminates and composites, etc. wherein said cyanato-groups will be reacted after applying the macromolecules (e.g. after coating, painting, prepreg manufacturing) to obtain a more dense, crosslinked polymeric system.

As outlined before, the higher the amount of (monofunctional) fluorinated alcohols or phenols, the lower the molecular weight distribution of the resulting polymer, which is illustrated in Figure 4. This figure shows the increase of the lower molecular weight content by increasing the amount of OH-compounds.

By increasing the amount of the alcoholic component, also the amount of OH-groups will increase. Glycidyl ether components can be used as comonomers. In such cases, it is preferable to use a two-step procedure. In a first step, the glycidyl ether component is reacted with the di- or higher functional cyanate, resulting in a product having free OH groups. More functional groups can then be incorporated in the second step, using one or more mono- or higher functional phenols or fluorinated alkylalcohols. Thus, the hydroxy group content of the resulting hyperbranched compounds can be tuned in a wide range by changing the relations between cyanate(s) and OH-compound(s), and the molecular weight (or, rather, the molecular weight distribution) can be tuned in the desirable weight, at least partly independent thereof.

In another preferred embodiment of the invention, using an epoxide component as outlined above, the cyanato-groups are not completely converted, such that the conversion of the cyanate-epoxyde-system does not result in a gelated polymer. This may be achieved by cooling the reaction mixture adequately, or, in some cases, by removing the heating source. If the addition of an alcoholic component is done in a second step, as outlined above, one or more of the above mentioned OH-containing monomers can be incorporated into the (pre)polymer, since the reaction of the cyanates with the epoxydes will inter alia result in the formation of OH-groups. As epoxyde-containing compounds, oligomeric or polymeric compounds containing epoxyde-groups can be used instead or in addition to monomeric epoxides. These macromolecules can be converted into new macromolecules as described in (ii).

Instead of the epoxydes as co-components, one or more out of a number of various compounds can be used, for example OH-terminated (semi-) fluorinated oligoethers or polyethers (for Example T10®, D10 ® from Solvay Solexis).

As OH-containing compounds, also oligomeric or polymeric materials having OH-groups can be used, instead or in addition to monomeric compounds.

The reaction speed of reaction of the cyanates with each others, respectively with the OH-containing monomers or the cocomponents can be increased using appropriate catalysts (for example metal salts, e.g. zinc-salts, Mn(acac)₂, amines, ferrocenes, Co(acac)₂, salts of aluminum, alumina, etc.).

Use of catalysts can result in the reduction of temperature required for the formation of the network. Catalysts also can influence possible side reactions. For example, the color of B10-prepolymers without catalyst is an intense yellow. Using 0.1-0.5% ZnCl₂, the color of the resulting prepolymer with the same degree of conversion is a slight pale yellow.

### Example 1.1 (Synthesis of OH-containing cyanurate-macromolecules):

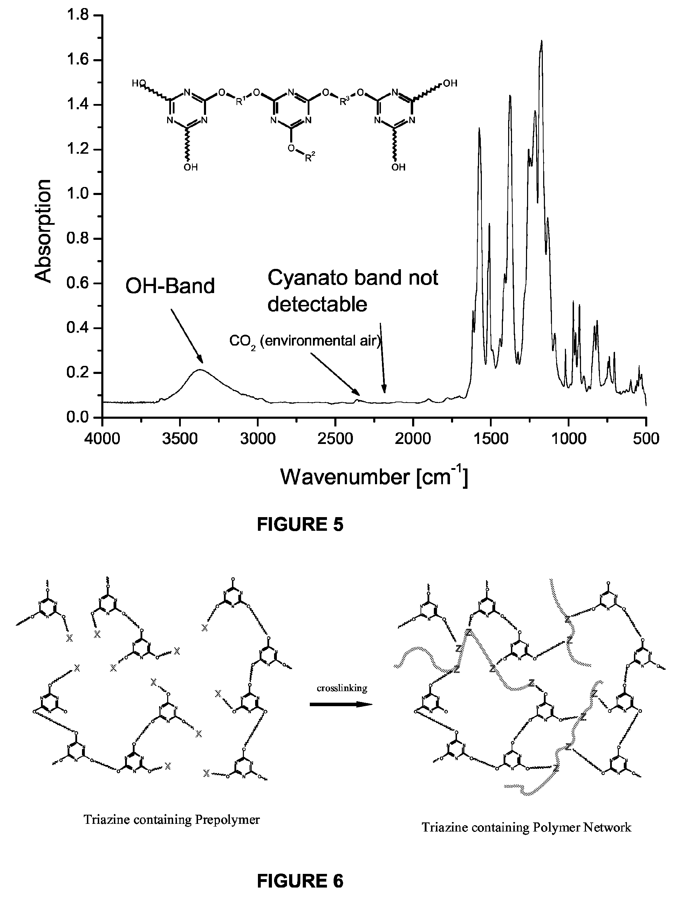

12.939 g (33.5 mmol) of 2,2'-Bis(4-cyanatophenyl) hexafluoroisopropylene (F10), 1.081 g (4.1 mmol) of 2,2,3,3,4,4,5,5-octafluorohexane-1,6-diol and 8,664 g (24,7 mmol) of 2,2,3,3,4,4,5,5,6,6,7,7,7-tridecafluoroheptan-1-ol were heated in a sealed vial under nitrogen for three hours at 180°C while stirring using a teflon coated magnetic stirring bar. A slightly yellow, soluble, meltable and brittle solid OH-containing prepolymer is obtained. The cyanato groups are completely converted into triazine-rings, as proven via IR-spectroscopy (see figure 5, indicating the IR spectra of the OH-containing triazine-polymer of Example 1.1.).

### Example 1.2 (Two-Step synthesis of OH-containing cyanurate-macromolecules via epoxyde-incorporation):

12.939g (33.5 mmol) of 2,2'-bis(4-cyanatophenyl) hexafluoroisopropylene (F10) and 1.2939g (3.6 mmol) (10-mass-%) of 1,3-bis(glycidoxypropyl)tetramethyldisiloxane (BGTMSi) were heated in a sealed vial under nitrogen at 160°C for 2h. BGTMSi has the following structure:

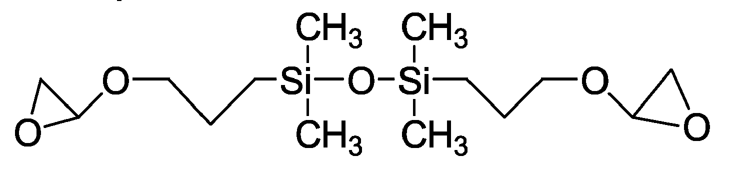

Within the reaction time, the epoxyde-groups have reacted completely with the cyanate. The major amount of the cyanato-groups has, however, not reacted under these conditions. This is proven via IR-spectroscopy.

In a second step, 1.081 g (4.1 mmol) of 2,2,3,3,4,4,5,5-octafluorohexane-1,6-diol and 8,664 g (24,7 mmol) of 2,2,3,3,4,4,5,5,6,6,7,7,7-tridecafluoroheptan-1-ol were added to the dark-yellow solid. The mixture was heated in a sealed vial under nitrogen for four hours at 180°C to obtain a complete conversion of the cyanato-groups. The conversion of the cyanato-groups was proven via-IR-spectroscopy.

### (ii) Conversion of the OH-Groups of the hyperbranched compounds

The hydroxy groups of the novel macromolecules (hyperbranched compounds) described in (i) can be transformed into other reactive groups X, resulting in hyperbranched molecules which can be regarded as crosslinkable macromolecules or prepolymers from which then crosslinked polymers may be prepared, and/or they (i.e. all or part thereof) can be transformed into reactive or non-reactive groups P.

In order to cause said transformation, the OH containing hyperbranched compounds as defined above and in claims 1 to 10 are preferably subjected to an esterification reaction, the reaction partner having the following formula

Q-C(O)Y

Wherein Q is either a reactive residue X which may be subjected a crosslinking reaction, or a residue P which is incapable to undergo such a crosslinking reaction and which may be either inactive or may be subjected to substitution or condensation reactions or the like. Y is preferably selected from hydroxy and halo, preferably a chloride, but can be any residue which together with -C(O) forms a acid or acid derivative capable of reaction with the hydroxy groups of the said OH containing hyperbranched compounds.

As mentioned before, reactive residue X is or contains a crosslinking residue. The principle of crosslinking triazine containing polymers having reactive end-groups X is shown in Figure 6.

Crosslinking groups X can easily be found by a skilled person; preferably, X is selected from groups containing at least one C=C double bond, e.g. vinyl, allyl, styryl, norbornenyl, and the like. Further, either itself or together with -C(O)Y, it may form or comprise an acrylate or methacrylate residue. In alternative embodiments, a mixture of different hyperbranched molecules (compounds) are used wherein, in a first compound, at least part of the hydroxy groups have been converted into X groups which are selected from those containing double bonds, for example norbornenyl residues, while in at least a second hyperbranched molecule or compound, at least part of the hydroxy groups have been converted into P groups which are capable to react with C=C double bonds, e.g. -SH residues. The said mixture of compounds can later be subjected to an en-ol-addition by which the different hyperbranched compounds together will form a polymeric material. Instead, it will be possible to convert part of the hydroxy groups of the hydroxy groups containing hyperbranched compounds of the present invention into such X groups, and another part into such P groups. Again, by an en-ol reaction, a polymeric material can be obtained therefrom.

As known in the art, crosslinking of residues X can be done thermally or, appropriate reactive groups X given, via UV-irradiation with XUV-irradiation, via electron beam or with ionizing irradiation (X-ray, Gamma, or comparable energy-rich irradiation) or with microwaves and the like.

Of course, it will be possible to perform the conversion of the hydroxy groups containing hyperbranched compounds with a mixture of molecules X-C(O)Y having different residues X, in order to provide highly specifically tailored hyperbranched macromolecules which can be processed further as desired, e.g. with a two-step curing method (using two different residues X for two different curing steps, e.g. a first residue X being susceptible to thermal curing and a second residue X being succeptible to curing via irradiation).

One preferred embodiment of the invention is directed to a crosslinkend thermoset polymer, which is insoluble and shows a high thermostability in the crosslinked state.

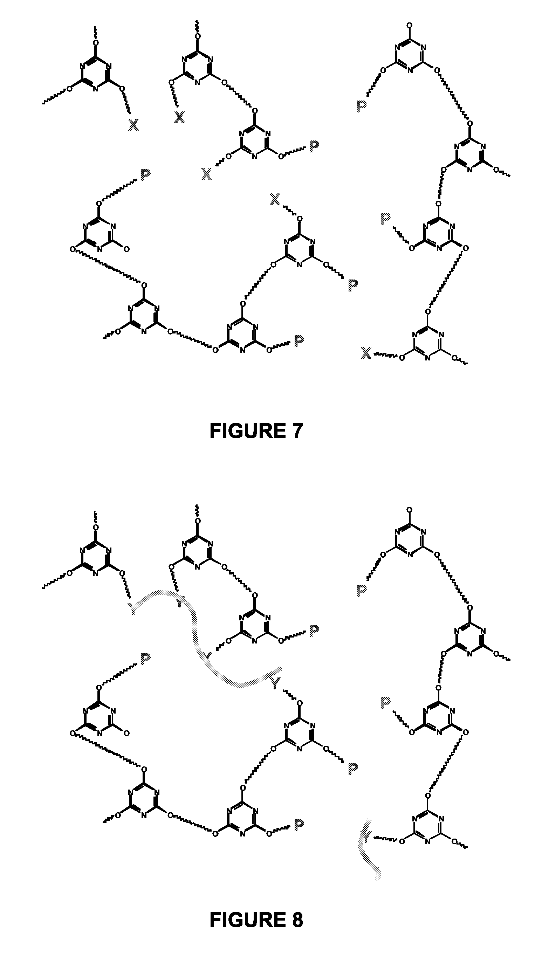

Another preferred embodiment of the invention is directed to a polymer, synthesized from (i), but with a relatively low number of reactive groups X. Hence the resulting macromolecule will not be crosslinked and will be soluble in common organic solvents. To obtain such a macromolecule, a major number of the OH-groups of the OH-terminated macromolecule (Figure 3) needs to be transformed into "passive" groups P which are non-reactive under normal chemical circumstances, e.g. aliphatic, aromatic or aliphatic/aromatic groups which do not contain a double bond or; the remaining OH-groups are then transformed into the reactive groups X. This "semi-passivation" is depicted in Figure 7.

In another alternative embodiment, residues P may be or contain reactive groups which can undergo condensation reactions, e.g. a (second) carboxylic residue (preferably protected, in order to avoid direct reaction with the hydroxy groups of the hyperbranched compound) which may then be used for further reactions (e.g. a further esterification with an alcohol). Such residues therefore enable the preparation of further modified hyperbranched molecules or they impart specific properties to the molecule, e.g. acidity, hydrophilic/hydrophobic properties or the like. Further, P may be or comprise one or more groups which are easily substituted or converted into another group. In summary, the introduction of residues P may result in a broad variety of the properties of the hyperbranched molecules, since with P, a wide variety of differently useful groups can be introduced, e.g. fluorescent or light emitting groups, electrochromic dyes, azo-dyes, markers, indicators, capture residues, residues having ion conducting or ion exchanging capabilities or the like.

The reaction of X can result in an increase of the molar masses of the macromolecules, by coupling of some of the molecules (see Figure 8) while a complete crosslinking is avoided if the ratios of X, P and the initial molecular masses were chosen in an appropriate way. Such macromolecules having relatively low molar masses can be used as soluble coatings etc. Figure 8 shows crosslinking units X which can react with one ore more other X-groups, as it is known for the acrylate- or methacrylate-groups. The crosslinking can also be done via a dimerization of the reactive groups X. An example for such a dimerizing group is the cinnamic acid. Needless to say that such a system will form a network less dense than an acrylate-based one - given, the structure of the polymers are identical besides the reactive groups X.

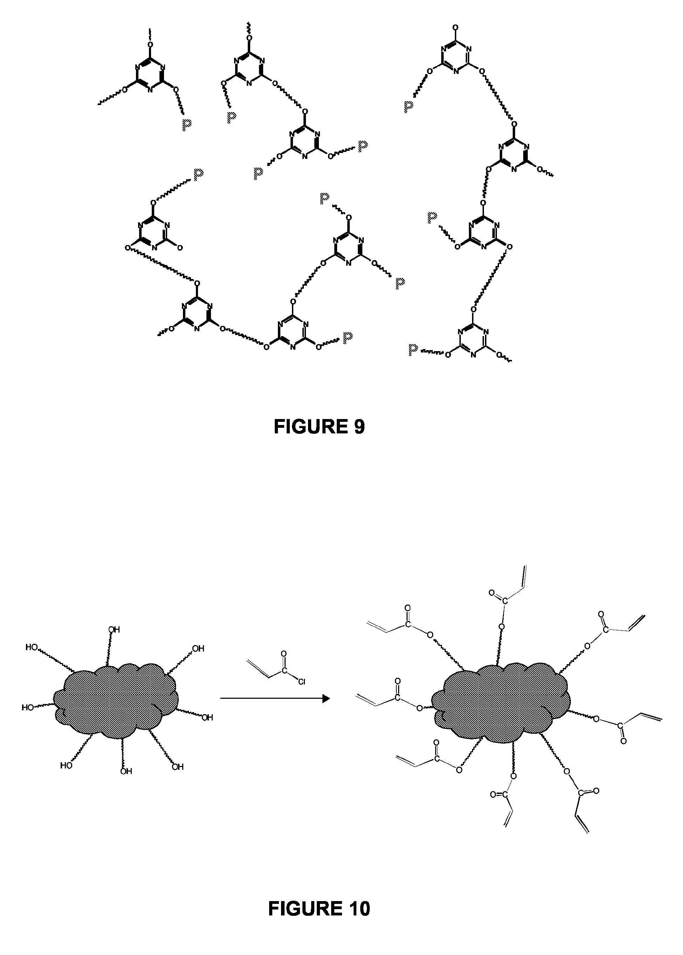

In another preferred embodiment of the invention all OH-Groups are passivated by non-reactive groups P. This will result in a merely slight increase of the molar masses of the macromolecules (see Figure 9, showing a complete passivation of the OH-terminated macromolecules). Such a derivatization or functionalization can be used in order to change the properties of the macromolecules significantly, for example their polarity, solubility, to incorporate dyes, organic-inorganic hybridmolecules, and the like.

The said macromolecules and the partly passivated counterparts as seen in Figure 8 can also be regarded as hyperbranched polymers. In contrast to dendrimers, the access to these hyperbranched molecules is much easier. At the same time, the great advantage of dendrimers, which lies in the presence of a high number of functional groups, will be seen with the said hyperbranched polymers of the present invention as well, although their concentration as within an analogous dendrimer cannot completely be reached by this means.

The presence of the said so-called passivation groups can have different functions or aims. For example, the optical loss can be lowered, the electro-optical (EO)-coefficient may be increased, glass-transition-temperature (Tg) can be adjusted, the refractive index can be tuned, fracture toughness can be increased, and so on. Of course, two or even more more different passivating groups (non-reactive groups) (P1, P2, ..., Pn), can be used, in order to specifically tailor the desired properties of the product.

The reactive groups X can be chosen from different functional groups, for example acrylates, methacrylates, cinnamic acids, allylic compounds, vinylcompounds, styrenes and the like.

In one preferred embodiment of the invention, these reactive groups X can be incorporated into the macromolecules (Figure 3) by esterification of the OH-compound with carboxylic (or acylchlorid)- functionalized derivatives of acrylates, methacrylates, cinnamic acids, allylic compounds, vinylcompounds, styrenes, and also via the reaction with amines.

Alternatively, the OH-Groups can be converted directly into other functional groups (e.g. into carboxylic acid via oxidation).

As an example, the esterification of the OH-containing or -terminated macromolecules with acrylic acid chloride is shown in Figure 10.

The crosslinking of the esterificated macromolecules (Figure 10) will depend on the particular crosslinking unit.

Examples:
cinnamic acid dimerizes via UV-irradiation. Acrylic groups polymerize thermally (with the aid of an initiator) or via UV-irradiation or via E-beam irradiation.

### Example 2.1 (Esterification of OH-containing macromolecules with acrylic acid chloride):

The OH-containing polymer of Example 1.1 was dissolved in 100 ml of dry chloroform. The reaction flask was equipped with an in- and outlet for nitrogen and a dropping funnel with pressure equalizer. The turbid solution was cooled down to 0°C under stirring.

After addition of 11.15 ml (80 mmol) of dry triethylamine the solution of the polymer clarified. 6.175 ml (76 mmol) of acrylic acid chloride was dissolved in 10ml dry chloroform and added dropwise within 16 min. to the reaction solution, maintaining the temperature in the flask between +1 and +6°C. The solution was allowed to warm up to room temperature and stirred another 3 h. The reaction solution was washed 1x with water, 1x with diluted hydrochloric acid and again 2x with water. The organic fraction was dried over sodium sulfate over night.

As the solution contained a significant amount of OH (detected via IR-spectroscopy), the sodium sulfate was removed and the solution transferred into a flask (quipped as described above), cooled down again to approx. 0°C, and another 24 mmol of trietylamine was added. 23 mmol of the acrylic acid chloride were added dropwise to the solution, maintaining the temperature between 1 and 6°C. The reaction mixture was allowed to warm up to room temperature and stirred another hour. The reaction solution was washed 1x with water, 1x with diluted hydrochloric acid and again 2x with water. The organic fraction was dried over sodium sulfate over night. No OH could be detected in the solution via IR-spectroscopy.

The solution was concentrated at the rotary evaporator to approx. 60 ml. The concentrated solution was precipitated in 700 ml of abs. ethanol, washed with ethanol and dried onto a filter leaf paper.

11.55g of a white powder were obtained. The structure elucidation was done via IR-spectroscopy (formation of the ester-band and disappearing of the OH-band) and NMR-spectroscopy.

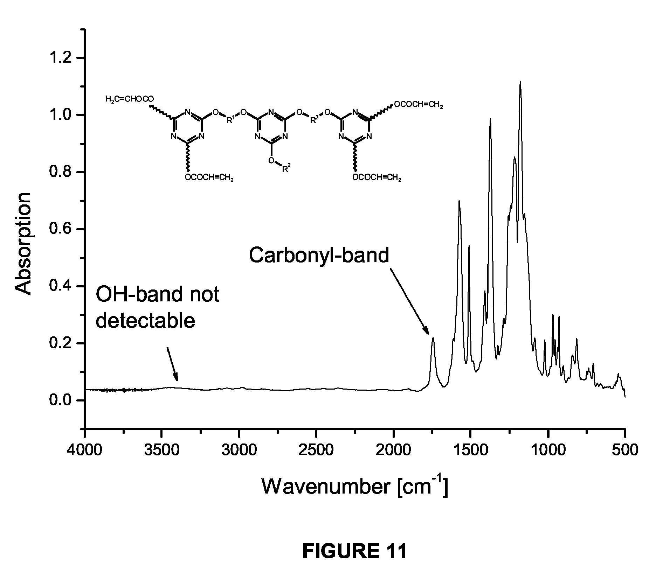

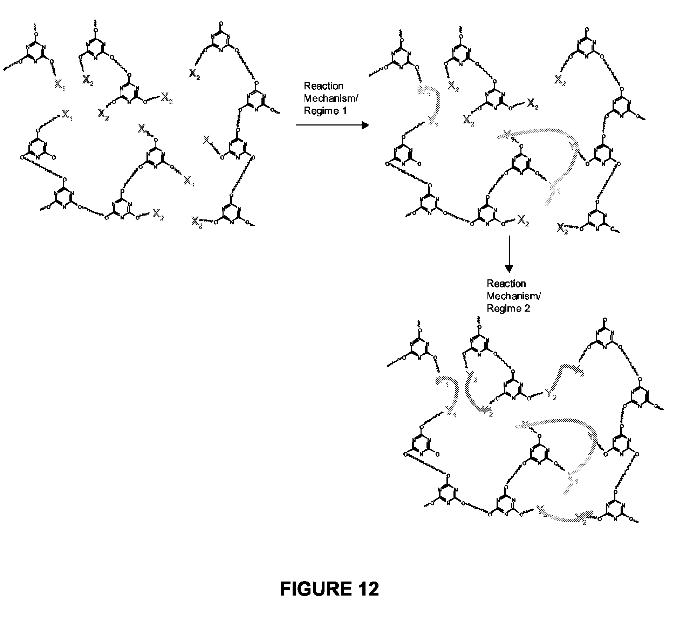

The GPC shows a Mn of 2270 and a Mw of 7030. The IR-Spectra of the triazine-acrylate is shown in Figure 11.

### Example 2.2 (Esterification of OH-containing macromolecules containing BGTMSi with acrylic acid chloride):

The macromolecules obtained in Example 1.2 can be converted into the corresponding acrylic acid esters analogous to Example 2.2:

In a 250 ml three-neck-flask, equipped with in- and outlet for nitrogen and a dropping funnel with pressure equalizer, the OH-containing polymer from Example 1.2 was dissolved in 120 ml of dry chloroform. A brown, turbid solution was obtained. Using an ice bath, the temperature of the solution was cooled down to approx. 0°C. 9.6 ml triethylamine, dissolved in 16 ml dry chloroform were added to the solution, which then clarified. 8.04 ml of acrylic acid chloride were dissolved in 16 ml of dry chloroform. 2/3 of the acrylic acid chloride solution were added dropwise to the reaction mixture, keeping the temperature in the flask between +1 and +4 °C. After complete addition of the acid chloride, the solution maintained brown and clear. The reaction mixture was allowed to warm up to room temperature and stirred some hours. The mixture was washed with approx. 2000 ml of water and dried over sodium sulfate. The sodium sulfate was removed by filtration and the solution was poured back into the reaction flask. The residual acid chloride solution was added dropwise to the solution after cooling down to 0°C. The temperature again was maintained between +1 and +4 °C. The solution was allowed to warm up to room temperature and extracted 3x with rather large amounts of water and dried over sodium sulfate. The solution was concentrated at the rotary evaporator and precipitated in 600 ml n-heptane. A sticky solid was obtained, which was dried in the desiccator over phosphorus pentoxide. 11.36g of a white powder were obtained.

The IR-Spectroscopic analysis showed no remaining OH-group.

For the polymer, GPC provided a Mw of 3500 g/mol and a Mn of 17300 g/mol.

### (iii) Polymerization and copolymerization of the polymers obtained according to (ii)

Mixtures of the different polymers described under (ii) can be polymerized with each others:

Polymers with the same crosslinking group X1 form a homogeneous network.

In specific cases, polymers with different crosslinking units X1, X2, ... may react with each other to form a homogeneous network. In other cases, polymers with different crosslinking units X1, X2, ... cannot react with each other and thus form a heterogeneous interpenetrating network, or phase separation occurs.

A polymer obtained from (ii) containing two different reactive groups X1 and X2, where the two reactive groups X1 and X2 are not able to react with each other, can show some useful properties. Such a polymer can be crosslinked in a first step via the crosslinking unit X1, which for example is more reactive than X2, or with a unit X1 having a different mechanism compared to X2. The properties of this - already via X1 crosslinked - polymer can be changed or even adjusted via partly or even complete conversion of X2, as shown in Figure 11 demonstrating the two step crosslinkling of a triazine containing polymer containing two different crosslinking units X1 and X2.

To obtain a two-step reaction, either the groups X1 and X2 need to have a significant different reactivity, or X1 and X2 need to have different reaction mechanisms.

In one preferred embodiment of the invention reactive group X1 reacts thermally at lower temperatures and X2 reacts thermally at higher temperatures. Hence if the polymeric system is cured at lower temperatures only X1 reacts, while X2 will not react or only a small amount of X2 will react. Applying a higher temperature to the polymer will result in partly or complete conversion of X2. Depending from the curing temperature (and time) the crosslinking can be made more dense. This can be used e.g. to change or even adjust the absolute refractive index of the material accurately. Also other properties, like Tg (glass transition temperature), solubility, water uptake etc. can be adjusted by the degree of conversion of X2.

Examples for groups X1, X2 having different reactivities are e.g. X1=acrylate, X2=allyl, or X1=acrylate, X2=trifluorovinylidene-group .

In another preferred embodiment of the invention the reactive group X1 can react thermally induced, whereas X2 can only react if induced by irradiation. Hence, the polymeric material can be crosslinked in a first step using reactive group X1, and in a second step, the material can be crosslinked even denser. Using an appropriate mask, the polymer can be irradiated e.g. only partly. Via such a technique, a local change of different properties (e.g. refractive Index, Tg, solubility, water uptake) can be obtained.

The other way - first irradiation (of X2) then thermal conversion of X1 - is also possible. An example for respective groups is X1=acrylate, X2=cinnamic acid.

In another preferred embodiment of the invention, this partly irradiation can be used to obtain optical waveguides, as the change of the refractive index only occurs on the places where the polymeric material was irradiated.

In another embodiment of the invention the waveguides can be also directly written into the polymer by using an appropriate focussed laser or E-Beam.

Even if the groups X1 and X2 have similar reactivities and both groups either react thermally or radiation induced and thus it isn't possible to obtain a stepped conversion of X1 and X2, the resulting polymers can have useful properties, e.g. increased or reduced solvent stability, increased stability against humidity, acids, bases etc.

With this technique, the refractive index can be tuned, the tendency to crack-formation can be reduced, the birefringence can be reduced/tuned. Tg can be increased or adjusted.

### (iv) Miscellaneous

The molecular mass distribution of the OH-terminated triazine polymers can be varied over a broad range by different ways.

For example:
- Increasing the content of OH-containing molecules copolymerized with the cyanates results in lower masses.
- Increasing the amount of monofunctional cyanates results in lower masses of the resulting macromolecules.
- Increasing the amount of di- or polyfunctional cyanates results in higher molar masses.
- Substitution of monofunctional phenols or fluoroalcohols against di- or polyfunctional compounds results in higher molar masses.

### (v) Applications of the novel triazine containing polymers according to the present invention

The inventive polymers can be used for the preparation of Optical Waveguides (Multimode, Monomode), integrated optical devices (TO-switches, AWGs etc.), substrate materials for integrated optical devices, filled and unfilled substrate materials, hybrid materials, substrate materials for microelectronics, paintings, coatings, adhesives, encapsulants, sealants for microelectronics, automotive components and the like.

The hyperbranched polymers can be used as carriers for catalysts, pharmaceutical agents, materials for chromatographic colums and the like.

Mooreover, low-k dielectric materials for applications in microelectronics are required. For modern microprozessors with higher and higher operating frequencies, there is a demand for dielectric materials with low dielectric constants and high thermal stabilities and further important properties (good adhesion and the like)

In addition, the materials of the present invention are useful for the preparation of lenses, fresnel lenses, prisms etc. for special applications, and the like, in particular with high transparency in the near infrared wavelength region. Fresnel lenses can be obtained by change of refractive index e.g. via local irradiation, via etching techniques, via self assembly by using a special substrate, via printing techniques etc.

In addition, the materials of the present invention can be used as matrix materials for reinforced plastic materials, e.g. as photosensitive materials, if they contain appropriate end groups. Further, they are useful as base materials for plastic optical fibers (POFs).

Choosing the triazine network in such a way that a fiber can drawn or spun from the polymeric material, can result in (optical) fibers with unique optical and thermomechanical properties, which can be adjusted in a broad range. Using appropriate reactive groups X (only one reactive group or even more) would allow to make fiber which can be cured during or after the drawing of the fiber, hence POFs from crosslinked polymeric materials can be obtained from the materials of the present invention. Thus POFs with high thermal stability can be obtained by crosslinking of the drawn or spun fiber.

### Example 3.1 (Material for integrated optical waveguides):

(a) A cladding material for integrated optical waveguides was developed using the route described in Examples 1.1 and 2.1.
   The OH-containing triazine-polymer was synthesized as written in example 1.1 and esterified using acrylic acid chloride as described in example 2.1. The obtained polymer was dissolved in 2-ethoxyethylacetate (2-EEA) and filtered under cleanroom conditions through a 0.2µm PTFE-membrane-filter.
   The solution was spincoated on silicone-substrates with 1000rpm and cured at 180°C for 60min. onto a hot-plate under nitrogen atmosphere.
   Homogeneous layers which are stable against common solvents were obtained.
   Prism-coupling technique was used to determine the refractive index (nTE). The refractive index for the above mentioned system and curing regime is 1.4571 +/-0.0001 @1550nm (23°C).
   Using optical loss measurement equipment determined the optical loss for this cured material with less than 0.4 dB/cm @1550nm.
   To obtain even more stable layers, the curing temperature was raised up to 210°C.
(b) A core material for integrated optical waveguides was developed using the route described in Examples 1.1 and 2.1.
   The OH-containing triazine-polymer was synthesized analogous to Example 1.1. In contrast to Example 1.1 the following components were used: 6.4685 g (16.75 mmol) of 2,2'-Bis(4-cyanatophenyl) hexafluoroisopropylene (F10), 0.5405 g (2.0625 mmol) of 2,2,3,3,4,4,5,5-Octafluorohexane-1,6-diol,2.1661 g (6.1875 mmol) of 2,2,3,3,4,4,5,5,6,6,7,7,7-Tridecafluoroheptan-1-ol and 1.12655 g (6.1875 mmol) of 2,2,3,3,4,4-Hexafluorobutan-1-01.
   The OH-containing triazine-polymer was then esterified using acrylic acid chloride as described in Example 2.1. The obtained polymer was dissolved in 2-Ethoxyethylacetate (2-EEA) and filtered under cleanroom conditions through a 0.2µm PTFE-membrane-filter.
   The solution was spincoated on silicone-substrates with 1000rpm and cured at 180°C for 60min. onto a hot-plate under nitrogen atmosphere.
   Homogeneous layers which are stable against common solvents were obtained.
   Prism-coupling technique was used to determine the
   refractive index (nTE). The refractive index for the above mentioned system and curing regime is 1.4679 +/-0.0001 @1550nm (23°C).
   Using optical loss measurement equipment determined the optical loss for this cured material with less than 0.5 dB/cm @1550nm.
   To obtain even more stable layers, the curing temperature was raised up to 210°C.

Hence, with (a) and (b), an index contrast of 0.0109 +/- 0.0002 has been realized, which can be used as a waveguiding material pair.

The structurization can be done by someone skilled in the art by reactive ion etching.

In summary, this invention is directed to:
a) OH-terminated triazine containing macromolecules consisting out of one or more at least difunctional cyanates (1a) (pre)polymerized with one or more monofunctional Phenols. The cyanato-groups can be converted partly or completely into triazine-rings.
b) OH-terminated triazine containing macromolecules consisting out of one or more at least difunctional cyanates (1a) (pre)polymerized with one or more monofunctional and one or more polyfunctional phenols. The cyanato-groups can be converted partly or completely into triazine-rings.
c) OH-terminated triazine containing macromolecules consisting out of one or more at least difunctional cyanates (1a) (pre)polymerized with one or more polyfunctional phenols. The cyanato-groups can be converted partly or completely into triazine-rings.
d) OH-terminated triazine containing macromolecules consisting out of one or more at least difunctional cyanates (1a) (pre)polymerized with one or more monofunctional partly or fully fluorinated mono-alcohols. The cyanato-groups can be converted partly or completely into triazine-rings.
e) OH-terminated triazine containing macromolecules consisting out of one or more at least difunctional cyanates (1a) (pre)polymerized with one or more partly or fully fluorinated monoalcohols and one or more partly or fully fluorinated di- or polyfunctional alcohols. The cyanato-groups can be converted partly or completely into triazine-rings.
f) OH-terminated triazine containing macromolecules consisting out of one or more at least difunctional cyanates (1a) (pre)polymerized with one or more partly or fully fluorinated monoalcohols and/or one or more partly or fully fluorinated di- or polyfunctional alcohols and one or more monofunctional and/or one or more polyfunctional phenols. The cyanato-groups can be converted partly or completely into triazine-rings.
g) OH-terminated triazine containing macromolecules analogous to a) to f) above, but containing additionally at least one monofunctional cyanate. The cyanato-groups can be converted partly or completely into triazine-rings.
h) OH-terminated triazine containing macromolecules analogous to a) to g) above, but additionally with alternate OH-containing compounds. These alternate OH-containing compounds can be OH-terminated oligomers or polymers (e.g. polyacrylates, polyesters, polyethers, polyimides, polyamides ... they can consist out of aromatic and/or aliphatic compounds ...) these polymers can be non-fluorinated, partly- or perfluorinated. Also diester and diethers can be used.
i) Acording to h) the alternate OH-containing compounds can be chosen from the oligoethers D10®, T10® and related structures semi-commercially available e.g. from Solvay Solexis.
j) OH-terminated triazine-containing macromolecules analogous to a) to f), but besides the cyanates they only contain the alternate OH-containing compounds according to g), h) and i).
k) OH-terminated triazine-containing macromolecules analogous to a) to i) above but in a first step the cyanato-compounds are reacted with epoxyde-containing (glycidyl-ether-containing) compounds.
1) OH-terminated triazine-containing macromolecules analogous to a) to k), but additionally they are obtained by adding primary or secondary amines to compositions described under a) to k).
m) OH-terminated triazine-containing macromolecules analogous to a) to 1), by which the reaction speed is increased by use of appropriate catalysts (for example Zinc-salts, Mn(Acac)2 etc.)
n) Triazine containing macromolecules with one or more reactive group(s) X1, X2, X3 ... obtained by reaction of the OH-terminated macromolecules (as defined in a) to m)) with different compounds.
o) Triazine containing macromolecules with two or more reactive groups X1, X2, X3 ... which can coreact with each others. X1, X2, X3 ... are obtained by reaction of the OH- terminated macromolecules (as defined in a) to m)) with different compounds.
p) Triazine containing macromolecules with two or more reactive groups X1, X2, X3 ... which cannot coreact with each others. X1, X2, X3 ... are obtained by reaction of the OH- terminated macromolecules (as defined in a) to m)) with different compounds.
q) Triazine containing macromolecules with one reactive group X1 obtained by reaction of the OH- terminated macromolecules (as defined in a) to m)) with different compounds.
r) Triazine containing macromolecules with one reactive group X1 obtained by reaction of the OH- terminated macromolecules (as defined in a) to m)) where the reactive group is chosen from acrylate, methacrylate, cinnamic acid.
s) Triazine containing macromolecules analogous as described before which can be cured in bulk or in thin layers using temperature, IR-irradiation, microwaves, UV-, X-Ray-, XUV-, E-beam-, gamma- ... irradiation.
t) The molecular mass distribution of the OH-terminated macromolecules can be varied over a broad range. The molecular mass distribution can be adjusted by different ways, described above.
u) Triazine containing Polymers as defined under a) to t) with low optical loss.
v) Triazine containing porous polymers as defined under a) to t) as low-k material, having high thermostability etc.
w) New triazine containing polymers as defined under a) to t) for use as monomode- or multimode- optical (lightguiding) waveguides.
x) New triazine containing polymers as defined under a) to t) for use as waveguiding materials in integrated optical devices (Arrayed Waveguide Gratings, Thermooptical Switches, Splitters, Routers, ...).
y) New triazine containing polymers as defined under a) to t) for use as monomode- or multimode- optical (lightguiding) waveguides, where the optical waveguides are obtained by Reactive Ion Etching, direct irradiation (UV, XUV, X-RAY, Gamma-irradiation), E-Beam-irradiation, direct laser writing, hot embossing, printing etc.
z) New triazine containing polymers as defined under a) to t) for use as substrate materials for Integrated optical devices.

aa) New triazine containing polymers as defined under a) to t) for use as substrate materials for Integrated optical devices where the polymeric substrate material can be a filled or unfilled polymer. The filler can be chosen from organic or inorganic materials.
bb) New triazine containing polymers as defined under a) to t) for use as substrate materials for use in semiconductor technology, laminates for PCBs (printed circuit boards) where the polymeric substrate material can be a filled or unfilled polymer. The filler can be chosen from organic or inorganic materials.
cc) New triazine containing polymers as defined under a) to t) for use as waveguiding Materials in printed (optical circuit boards)
dd) New triazine containing polymers as defined under a) to t) which are thermal or non-thermal (UV, XUV, E-Beam) cureable for use as matrix resins in composite materials, for preparation of prepregs and laminates.
ee) New triazine containing polymers as defined under a) to t) for use as materials for light weight construction, automotive, aeronautic area etc.
ff) New triazine containing polymers as defined under a) to t) for use as adhesives (thermally-, UV-, E-Beam cureable).

## Claims

1. Hyperbranchend compound, comprising triazine rings and containing free OH groups in the outer sphere, obtainable by copolymerization of
- (1) at least one di- or higher functional cyanate compound, and
- (2) at least one compound, selected from mono-, di- and polyvalent aromatic alcohols and mono-, di- and polyfunctional, partly or fully fluorinated alcohols.

2. Hyperbranched compound according to claim 1, wherein the mono-, di- and polyvalent aromatic alcohols are phenols which are preferably partly and more preferably fully fluorinated.

3. Hyperbranched compound according to claim 1 or 2, wherein the molar ratio of OCN groups of all cyanate compounds mentioned under (1) to hydroxy groups of all alcohol compounds mentioned under (2) is
- 1 to 1 or more than 1 as far as said hydroxy residues are bound to an di- or higher functional alcohol, and
- 1 to 0.5 or more than 0.5 as far as said hydroxy groups are bound to a monofunctional alcohol.

4. Hyperbranchend compound according to claim 1 or 2, **characterized in that** copolymerization is performed using a sufficiently high amount of the at least one alcohol compound such that the said compound is soluble in at least one of the group of solvents, consisting of methyl ethyl ketone, tetrahydrofurane, acetone, trichloromethane and dichloromethane.

5. Hyperbranched compound according to any of claims 1 to 4, wherein the at least one compound mentioned under (2) is at least one difunctional alcohol and at least one monofunctional alcohol.

6. Hyperbranched compound according to any of claims 1 to 5, wherein at least one of the compounds mentioned under (2) is selected under mono-, di- and polyfunctional, partly or fully fluorinated alcohols.

7. Hyperbranched compound according to any of claims 1 to 6, obtainable by copolymerization of
- (1) at least one di- or higher functional cyanate compound,
- (2) at least one compound, selected from mono-, di- and polyvalent aromatic alcohols and mono-, di- and polyfunctional, partly or fully fluorinated alcohols, and
- (3) at least one compound, selected from monofunctional cyanate compounds, epoxy group containing compounds, at least partly fluorinated oligoethers or at least partly fluorinated polyethers.

8. Hyperbranched compound according to any of claims 1 to 7, additionally comprising free cyanato groups.

9. Hyperbranched compound according to any of claims 1 to 8, wherein the at least one di- or higher functional cyanate compound is selected under 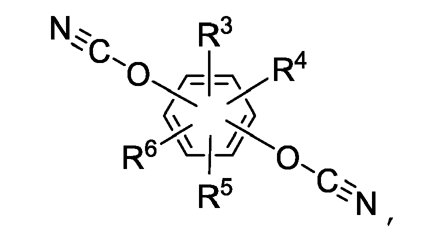 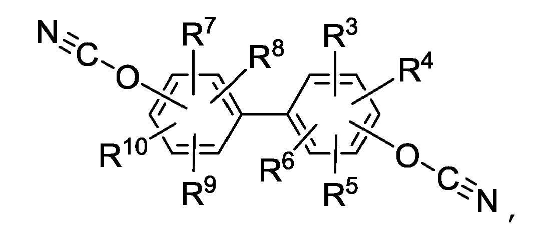 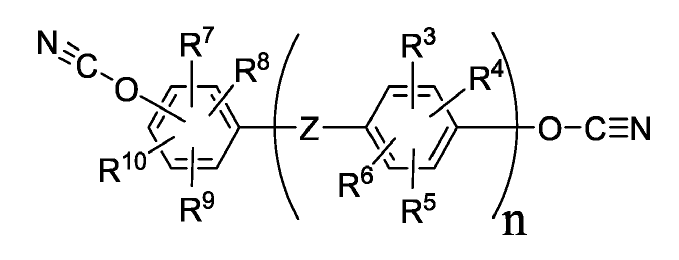 wherein
R², R³, R⁴, R⁵, R⁶, R⁷, R⁸, R⁹, R¹⁰ are radicals which are independently selected under -H, -F, -Cl, -Br, -I, straigth, branched or cyclic alkyl, partly fluorinated straight, branched or cyclic alkyl, fully fluorinated straight or branched or cyclic alkyl (the alkyl optionally being further substituted), more preferably -CH₃, -CF₃, - (CH₂)_{n*}-CH₃, -(CF₂)_{n*}-CF₃ (with n* from 1 to 18, even more preferably from 1 to 8), wherein part of F may be replaced by H, -CH(CF₃)₂, -C(CH₃)₃, -Ph, condensed aromates, -NO₂, -OCH₃, -O-C=O-R¹⁷, where R¹⁷ is freely selectable and preferably is an optionally substituted alkyl group or aryl group, and under epoxy groups, and wherein
n is an integer of preferably from 1 to 12, and wherein
Z is a chemical bond, SO₂, CF₂, CH₂, CHF, CH(CH₃)₂, isopropylene, hexafluoroisopropylene, n-or iso-C₁-C₁₈ alkylene which may be partly or fully fluorinated, O, NR¹⁹, N=N, CH=CH, -(C=O)-O-, CH=N, -C≡C-, CHN-N=CH, alkyloxyalkylene having 1 to 18 carbon atoms which is optionally partly or fully fluorinated, S, Si(CH₃)₂, or 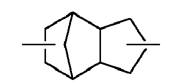 wherein R¹⁹ is hydrogen or C₁-C₁₈ alkyl, and wherein alternatively or in addition, one or more of R³, R⁴, R⁵, R⁶, R⁷, R⁸, R⁹, R¹⁰ can be -OCN or may carry an -OCN substituent; 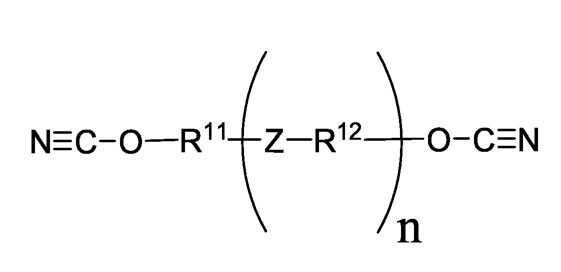 wherein R¹¹ and R¹² are straight, branched or cyclic alkylene or alkenylene groups preferably having 1, 2 or more preferably between 3 and 20 carbon atoms which can partly or fully be fluorinated,
Z is as defined above, and n is as defined above or instead, can be 0.

10. Method for the transformation of a hyperbranched compound as defined in any of claims 1 to 9 into an esterified compound, **characterized in that** the said hyperbranched compound is contacted with at least one organic acid compound of formula
Q-C(O)Y,
wherein Q is an organic residue X comprising at least one unit which can serve as a crosslinking unit, or an organic residue P which cannot undergo a crosslinking reaction, and wherein C(O)Y is either a carboxylic group or is an activated carboxylic residue.

11. Method according to claim 10, **characterized in that** residue X is selected from straight or branched, organic polymerizable groups having at least one carbon-carbon double bond.

12. Method according to claim 11, wherein residue X is selected from acrylate-, methacrylate-, or cinnamic acid or acrylate-, methacrylate-, or cinnamic acid containing groups.

13. Method according to claim 10, **characterized in that** residue P is selected from straight or branched, optionally fluorinated alkyl, aryl or mixed alkylaryl groups, hydrolyzable silane residues, dye-containing residues, organometal or silylic group containing residues, said organometal or silylic groups preferably being hydrolyzable, or residues containing -NH-, -NH₂, -C(O)-, -C(O)O-, -SH-, - NHC(O)-, -NHC(O)O-, -C(O)NHC(O)-,-O-, -S-, -PR--P(O)R-, wherein R is straight or branched alkyl having preferably 1-12 carbon atoms, said residues being either terminal or interrupting a carbon-carbon chain.

14. Hyperbranchend compound, comprising triazine rings and comprising -O(O)CQ groups in the outer sphere, obtainable by esterification of a hyperbranched compounds as claimed in any of claims 1 to 9 using at least one organic acid compound of formula
Q-C(O)Y,
wherein Q is an organic residue X comprising at least one unit which can serve as a crosslinking unit, or an organic residue P which cannot undergo a crosslinking reaction, and wherein C(O)Y is either a carboxylic group or is an activated carboxylic residue..

15. Hyperbranchend compound according to claim 14, **characterized in that** residue X is selected from straight or branched, organic polymerizable groups having at least one carbon-carbon double bond or at least one hydrolyzable silane residue.

16. Hyperbranchend compound according to claim 15, wherein residue X is selected from acrylate-, methacrylate-, or cinnamic acid or acrylate-, methacrylate-, or cinnamic acid containing groups.

17. Hyperbranchend compound according to claim 14, **characterized in that** residue P is selected from straight or branched, optionally fluorinated alkyl, aryl or mixed alkylaryl groups, dye-containing residues, organometal or silylic group containing residues, said organometal or silylic groups preferably being hydrolyzable, or residues containing -NH-, -NH₂, -C(O)-, -C(O)O-, -SH-, -NHC(O)-, -NHC(O)O-, - C(O)NHC(O)-,-O-, -S-, -PR--P(O)R-, wherein R is straight or branched alkyl having preferably 1-12 carbon atoms, said residues being either terminal or interrupting a carbon-carbon chain.

18. Hyperbranched compound according to any of claims 14 to 17, additionally containing remaining free hydroxy residues.

19. Hyperbranched compound according to any of claims 14 to 18, containing residues X and residues P.

20. Hyperbranched compound according to any of claims 14 to 19, containing different residues X.

21. Hyperbranched compound according to any of claims 14 to 20, containing different residues P.

22. Polymeric material, obtained by polymerization of a hyperbranched compound according to any of claims 14 to 21, wherein at least part of residues Q are residues X, wherein said residues X have been subjected a polymerization reaction with each other.

23. Polymeric material, obtained by a polymerization reaction of at least two different hyperbranched compounds according to any of claims 14 to 21, wherein at least part of residues Q in each of said two different hyperbranched compounds are residues X, wherein said residues X have been subjected a polymerization reaction with each other.

24. Polymeric material according to claim 23, wherein the meaning of said residues X of the first of said hyperbranched compounds differs from that of at least the second of said hyperbranched compounds.

25. Polymeric material according to claim 24, wherein the different residues X of said at least two different hyperbranched compounds are selected such that they did not react with each other during said polymerization reaction.
